# EUROPEAN PATENT APPLICATION

(11) **EP 4 389 347 A1**
(43) Date of publication of application: **26.06.2024**
(21) Application number: 21954267.7
(22) Date of filing: 20.08.2021
(51) Int. Cl.: B23Q 11/10

(54) **COOLANT PROCESSING DEVICE**

(71) Applicant: DMG Mori Co., Ltd., Yamatokoriyama-shi, Nara 639-1160 (JP)
(72) Inventor: OKAWARA, Yasuhito, Yamatokoriyama-shi, Nara 639-1160 (JP)
(74) Representative: Isarpatent
(86) International application number: PCT/JP2021/030633
(87) International publication number: WO 2023/021700

(57) **Abstract**

A coolant treatment device includes: a first tank (31) having a bottom portion (32); and a first pipe (71) that is connected to the bottom portion (32) and discharges a coolant. The bottom portion (32) includes a peripheral edge region (210) and a central region (220) defined therein, the central region having the first pipe (71) opened therein. The coolant treatment device further includes: a first coolant discharge portion (160) that discharges the coolant such that a swirling flow of the coolant is produced on the peripheral edge region (210); a second coolant discharge portion (170) that is provided at a position where the second coolant discharge portion faces the first coolant discharge portion (160) across the central region (220) in a top view, and that discharges the coolant such that a swirling flow of the coolant is produced on the peripheral edge region (210); and a third coolant discharge portion (180) that discharges the coolant in a direction which is directed from the peripheral edge region (210) toward the central region (220) and which avoids an opening of the first pipe (71) in the central region (220) in a top view.

## Description

### TECHNICAL FIELD

The present invention relates to a coolant treatment device.

### BACKGROUND ART

For example, Japanese Patent Laying-Open No. 2010-214487 (PTL 1) discloses a coolant tank that stores a coolant containing sludge. A cylindrical straightening vane is provided in a central part region of a bottom surface of the tank, and an annular flow path is defined between the straightening vane and an inner circumferential surface of the tank. Inside the tank, two discharge nozzles are provided for causing the coolant to flow as a swirling flow in the annular flow path.

Further, Japanese Utility Model Registration No. 3129588 (PTL 2) discloses a coolant liquid purification device including a water tank that stores a coolant liquid, a suction pipe located in a central part of the water tank to suction the coolant liquid, and two injection nozzles that inject the coolant liquid toward a circumferential wall of the water tank.

### CITATION LIST

### PATENT LITERATURE

PTL 1: Japanese Patent Laying-Open No. 2010-214487
PTL 2: Japanese Utility Model Registration No. 3129588

### SUMMARY OF INVENTION

### TECHNICAL PROBLEM

Coolant treatment devices used for machine tools and the like have been known, as disclosed in the patent literature described above. In such a coolant treatment device, foreign matter such as sludge or chips contained in a coolant may be deposited inside a tank. In this case, it is necessary to manually clean the inside of the tank, and thus considerable time and effort are required for the maintenance of the coolant treatment device.

Therefore, an object of the present invention is to solve the aforementioned problem, and to provide a coolant treatment device that can efficiently discharge foreign matter such as sludge or chips from inside a tank.

### SOLUTION TO PROBLEM

A coolant treatment device according to the present invention includes: a first tank that has a bottom portion and a side portion rising from a peripheral edge of the bottom portion, and can store a coolant at a position which is above the bottom portion and is surrounded by the side portion; and a first pipe that is connected to the bottom portion and discharges the coolant from inside the first tank. The bottom portion includes a peripheral edge region and a central region defined therein, the peripheral edge region extending circumferentially along the peripheral edge of the bottom portion, the central region being disposed inside the peripheral edge region and having the first pipe opened therein. The coolant treatment device further includes: a first coolant discharge portion that is disposed above the peripheral edge region and discharges the coolant such that a swirling flow of the coolant is produced on the peripheral edge region; a second coolant discharge portion that is disposed above the peripheral edge region, is provided at a position where the second coolant discharge portion faces the first coolant discharge portion across the central region in a top view, and discharges the coolant such that a swirling flow of the coolant is produced on the peripheral edge region; and a third coolant discharge portion that is disposed above the peripheral edge region and discharges the coolant in a direction which is directed from the peripheral edge region toward the central region and which avoids an opening of the first pipe in the central region in a top view.

According to the coolant treatment device configured as described above, by discharging the coolant from the first coolant discharge portion and the second coolant discharge portion to produce a swirling flow of the coolant on the peripheral edge region of the bottom portion, foreign matter such as sludge or chips can be moved from the peripheral edge region to the central region on the inside thereof. Further, by discharging the coolant from the third coolant discharge portion in the direction which is directed from the peripheral edge region toward the central region and which avoids the opening of the first pipe in the central region in a top view, turbulence is produced in the foreign matter such as sludge or chips deposited on the central region, and the sludge can be collected into the opening of the first pipe. Thereby, the foreign matter such as sludge or chips can be efficiently discharged from the first tank through the first pipe.

In addition, preferably, the third coolant discharge portion has a coolant discharge port that discharges the coolant. The coolant discharge port is opened at a position closer to a lower end portion of the side portion than to an upper end portion of the side portion in an up-down direction.

According to the coolant treatment device configured as described above, since the coolant discharge port is opened at the position closer to bottom portion, a greater turbulence can be produced in the foreign matter such as sludge or chips deposited on the central region of the bottom portion.

In addition, preferably, the third coolant discharge portion is provided at a position spaced upward from the bottom portion.

According to the coolant treatment device configured as described above, the swirling flow of the coolant formed on the peripheral edge region of the bottom portion can be suppressed from being interrupted by the third coolant discharge portion.

In addition, preferably, the third coolant discharge portion discharges the coolant toward a diagonally downward direction.

According to the coolant treatment device configured as described above, since the coolant is discharged from the third coolant discharge portion toward the bottom portion, a greater turbulence can be produced in the foreign matter such as sludge or chips deposited on the central region of the bottom portion.

In addition, preferably, the third coolant discharge portion has a coolant discharge port that is opened in a flattened shape to have an opening length in a horizontal direction larger than an opening length in an up-down direction, and that discharges the coolant.

According to the coolant treatment device configured as described above, since the coolant discharged from the third coolant discharge portion can flow more flatly along the surface of the bottom portion, a greater turbulence can be produced in the foreign matter such as sludge or chips deposited on the central region of the bottom portion.

In addition, preferably, the peripheral edge region includes an upstream-side region and a downstream-side region defined therein, with the third coolant discharge portion serving as a boundary, the upstream-side region being a region where a swirling flow of the coolant flows in a direction toward the third coolant discharge portion, the downstream-side region being a region where a swirling flow of the coolant flows in a direction away from the third coolant discharge portion. When a straight line connecting the third coolant discharge portion and the opening of the first pipe in the central region is assumed in a top view, the third coolant discharge portion discharges the coolant in a direction directed toward the central region in a range sandwiched between the straight line and the downstream-side region.

According to the coolant treatment device configured as described above, by producing a coolant flow in a direction along the direction of the swirling flow of the coolant on the central region of the bottom portion, turbulence can be produced in the foreign matter such as sludge or chips deposited on the central region of the bottom portion.

In addition, preferably, the peripheral edge region includes an upstream-side region and a downstream-side region defined therein, with the third coolant discharge portion serving as a boundary, the upstream-side region being a region where a swirling flow of the coolant flows in a direction toward the third coolant discharge portion, the downstream-side region being a region where a swirling flow of the coolant flows in a direction away from the third coolant discharge portion. When a straight line connecting the third coolant discharge portion and the opening of the first pipe in the central region is assumed in a top view, the third coolant discharge portion discharges the coolant in a direction directed toward the central region in a range sandwiched between the straight line and the upstream-side region.

According to the coolant treatment device configured as described above, by producing a coolant flow in a direction opposite to the direction of the swirling flow of the coolant on the central region of the bottom portion, turbulence can be produced in the foreign matter such as sludge or chips deposited on the central region of the bottom portion.

In addition, preferably, the coolant treatment device further includes a second pipe and a third pipe to which the coolant is supplied. The first coolant discharge portion and the third coolant discharge portion are connected to the second pipe. The second coolant discharge portion is connected to the third pipe.

According to the coolant treatment device configured as described above, since the coolant is supplied collectively to the first coolant discharge portion and the third coolant discharge portion, the coolant treatment device can have a simple configuration.

In addition, preferably, the coolant treatment device further includes a filter provided on a flow path of the coolant discharged from the first tank through the first pipe.

According to the coolant treatment device configured as described above, the foreign matter such as sludge or chips discharged from the first tank through the first pipe can be collected by the filter.

In addition, preferably, the coolant treatment device further includes a second tank that stores the coolant discharged from a machine tool main body, and a pump that pumps the coolant stored in the second tank toward the first coolant discharge portion, the second coolant discharge portion, and the third coolant discharge portion.

According to the coolant treatment device configured as described above, by utilizing the pump for returning the coolant to the first tank from the second tank that stores the coolant discharged from the machine tool main body, the foreign matter such as sludge or chips can be efficiently discharged

### ADVANTAGEOUS EFFECTS OF INVENTION

As described above, according to the present invention, it is possible to provide a coolant treatment device that can efficiently discharge foreign matter such as sludge or chips from inside a tank.

### BRIEF DESCRIPTION OF DRAWINGS

Fig. 1 is a system chart showing a coolant treatment device in an embodiment of the present invention.
Fig. 2 is a rear view showing a machine tool that uses the coolant treatment device in Fig. 1.
Fig. 3 is a side view showing a first tank in Fig. 1.
Fig. 4 is a perspective view showing the first tank in Fig. 1.
Fig. 5 is a cross sectional view showing the first tank viewed in a direction of arrows on a two-dot chain line V-V in Fig. 3.
Fig. 6 is a perspective view showing a first coolant discharge portion and a third coolant discharge portion.
Fig. 7 is a cross sectional view showing the first coolant discharge portion and the third coolant discharge portion viewed in a direction of arrows on a line VII-VII in Fig. 6.
Fig. 8 is a cross sectional view showing a variation of the coolant treatment device in Fig. 5.

### DESCRIPTION OF EMBODIMENTS

An embodiment of the present invention will be described with reference to the drawings. It should be noted that, in the drawings referred to below, identical or corresponding members will be designated by the same numerals.

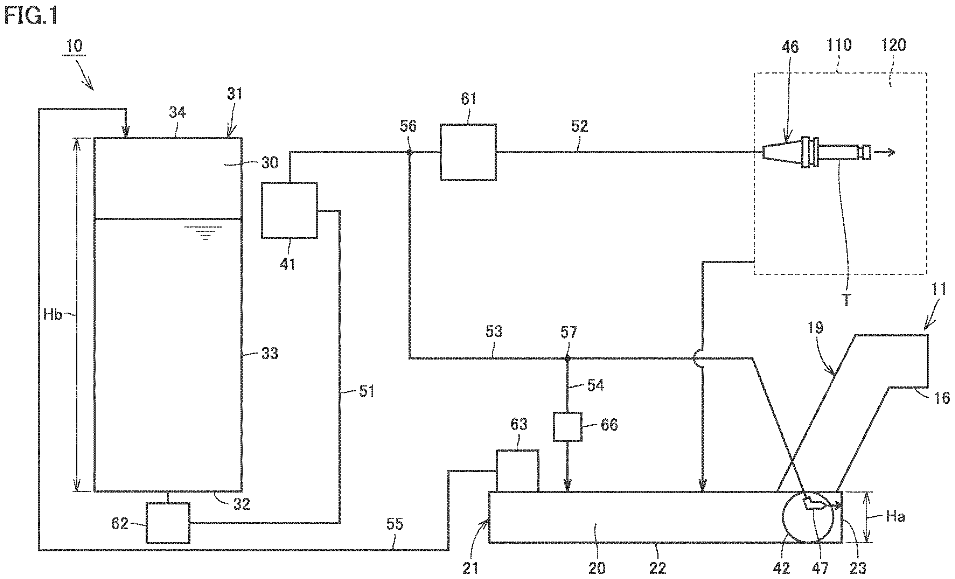

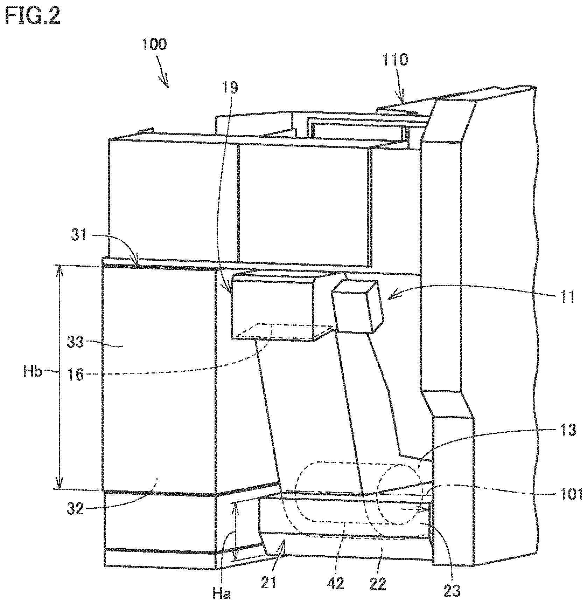

Fig. 1 is a system chart showing a coolant treatment device in an embodiment of the present invention. Fig. 2 is a rear view showing a machine tool that uses the coolant treatment device in Fig. 1.

Referring to Figs. 1 and 2, a coolant treatment device 10 in the present embodiment is used for a machine tool 100. Machine tool 100 is a machining center that performs workpiece machining by bringing a workpiece into contact with a rotating tool. Machine tool 100 is an NC (Numerically Controlled) machine tool in which various operations for the workpiece machining are automated by numerical control by a computer.

It should be noted that the machine tool for which the coolant treatment device in the present invention is used is not limited to a machining center, and may be a lathe that performs workpiece machining by bringing a tool into contact with a rotating workpiece, a composite machining machine having a turning function and a milling function, or an AM/SM hybrid machining machine capable of AM (Additive Manufacturing) machining of a workpiece and SM (Subtractive Manufacturing) machining of a workpiece.

Machine tool 100 has a machine tool main body 110 and a coolant treatment device 10. Machine tool main body 110 performs machining of a workpiece.

Machine tool main body 110 has a main body cover that defines and forms a machining area 120 for a workpiece and presents an external appearance of machine tool 100, a tool holding portion (a tool spindle) for holding a tool in machining area 120, and a workpiece holding portion (a table) for holding a workpiece in machining area 120.

Coolant treatment device 10 is provided in conjunction with machine tool main body 110. Coolant treatment device 10 is a device for treating a coolant used for the workpiece machining in machine tool main body 110. The coolant discharged from machine tool main body 110 in association with the workpiece machining is led to coolant treatment device 10, which stores the coolant. Coolant treatment device 10 cleans the coolant from machine tool main body 110, and supplies the cleaned coolant again to machine tool main body 110.

First, a system configuration of coolant treatment device 10 will be described. Coolant treatment device 10 has a chip conveyor 11. Chip conveyor 11 discharges chips generated in association with the workpiece machining in machining area 120, as well as the coolant, out of machine tool 100.

Chip conveyor 11 has a cover body 19 and a conveying device (not shown). Cover body 19 presents an external appearance of chip conveyor 11. Cover body 19 forms an internal space in which the conveying device is disposed. Cover body 19 is provided with a chip reception port 13 and a chip discharge port 16.

Chip conveyor 11 further has a drum filter 42. Drum filter 42 is housed in cover body 19. Drum filter 42 is provided on a route of a coolant flow from chip conveyor 11 toward a second tank 21 described later.

Drum filter 42 has a cylindrical shape centered on a central axis 101. Central axis 101 extends in a horizontal direction. Drum filter 42 is supported inside cover body 19 to be rotatable about central axis 101. Drum filter 42 is driven to rotate about central axis 101 by motive power transmitted from the conveying device (not shown).

Chip conveyor 11 is positioned with respect to machine tool main body 110 such that chip reception port 13 is opened immediately below machining area 120. A chip bucket for collecting chips is disposed below chip discharge port 16.

The chips and the coolant discharged from machining area 120 are received into cover body 19 through chip reception port 13. The chips are conveyed toward chip discharge port 16 by the conveying device (not shown), and are collected into the chip bucket. The coolant is filtered by entering the inside of drum filter 42 from the outside thereof. The coolant cleaned by drum filter 42 is discharged from the inside of drum filter 42 to second tank 21 described later.

Coolant treatment device 10 further has a first tank 31 and second tank 21. First tank 31 and second tank 21 are each a box body that can store the coolant.

Chip conveyor 11 is housed in second tank 21. Chip conveyor 11 is provided at a position where it overlaps second tank 21 in a top view. First tank 31 is provided to be placed separately from chip conveyor 11. First tank 31 is provided at a position where it does not overlap chip conveyor 11 in a top view.

Second tank 21 has a bottom portion 22 and a side portion 23. Bottom portion 22 is disposed at the bottom of second tank 21. Bottom portion 22 has a rectangular shape in a top view, for example. Side portion 23 rises from a peripheral edge of bottom portion 22. A lower end portion of side portion 23 is connected to bottom portion 22. A storage space 20 that can store the coolant is formed at a position which is above bottom portion 22 and is surrounded by side portion 23.

Second tank 21 has a tank height Ha. Tank height Ha corresponds to a maximum length of side portion 23 in an up-down direction.

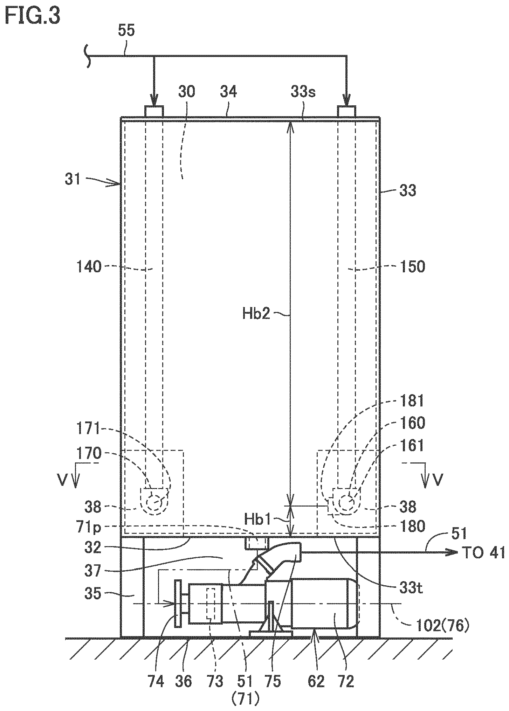

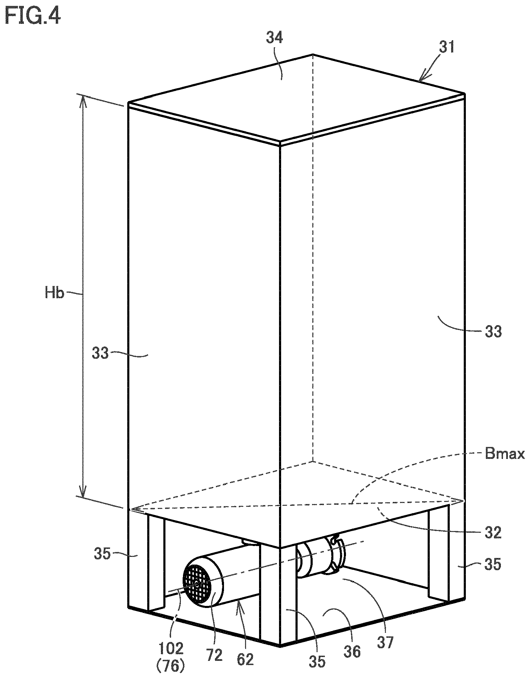

Fig. 3 is a side view showing the first tank in Fig. 1. Fig. 4 is a perspective view showing the first tank in Fig. 1.

Referring to Figs. 3 and 4, first tank 31 has a bottom portion 32 and a side portion 33. Bottom portion 32 is disposed at the bottom of first tank 31. As a representative example, bottom portion 32 has a rectangular shape in a top view. Bottom portion 32 is disposed parallel with respect to a horizontal plane. Side portion 33 rises from a peripheral edge of bottom portion 32. A lower end portion of side portion 33 is connected to bottom portion 32. A storage space 30 that can store the coolant is formed at a position which is above bottom portion 32 and is surrounded by side portion 33.

First tank 31 further has a top portion 34. Top portion 34 is disposed at the ceiling of first tank 31. Top portion 34 faces bottom portion 32 in the up-down direction. Top portion 34 is removably attached to an upper end portion of side portion 33. Top portion 34 constitutes a lid body that closes an upper end opening of side portion 33.

First tank 31 has a tank height Hb. Tank height Hb corresponds to a maximum length of side portion 33 in the up-down direction. First tank 31 has a height higher than that of second tank 21. Tank height Hb is larger than tank height Ha (Hb > Ha).

As shown in Fig. 4, a maximum length Hb of side portion 33 in the up-down direction is larger than a length Bmax of a straight line connecting two farthest points on the peripheral edge of bottom portion 32 when viewed in a top view (Hb > Bmax). Bmax corresponds to a length between two corner portions disposed at opposite corners in bottom portion 32 having a rectangular shape.

Maximum length Hb of side portion 33 in the up-down direction may be larger than 1.2 times length Bmax of the straight line connecting the two farthest points on the peripheral edge of bottom portion 32 when viewed in a top view (Hb > 1.2×Bmax). Maximum length Hb of side portion 33 in the up-down direction may be less than or equal to twice length Bmax of the straight line connecting the two farthest points on the peripheral edge of bottom portion 32 when viewed in a top view (Hb ≤ 2×Bmax), or may be less than or equal to 1.5 times length Bmax of the straight line connecting the two farthest points on the peripheral edge of bottom portion 32 when viewed in a top view (Hb ≤ 1.5×Bmax).

Bottom portion 32 may be disposed obliquely with respect to the horizontal plane. When the upper end portion of side portion 33 is at the same height in such a configuration, maximum length Hb of side portion 33 in the up-down direction is represented by a length in the up-down direction of side portion 33 rising from the peripheral edge of bottom portion 32 at the lowest position of bottom portion 32.

The shape of bottom portion 32 in a top view is not limited to a rectangular shape, and may be a polygonal shape other than a rectangle, may be a circular shape, or may be an L shape, for example. The straight line connecting the two farthest points on the peripheral edge of bottom portion 32 for determining length Bmax may pass through a position where it is not projected on bottom portion 32 in the up-down direction, between the two farthest points on the peripheral edge of bottom portion 32.

The area of bottom portion 32 of first tank 31 is smaller than the area of bottom portion 22 of second tank 21. The capacity of the coolant in first tank 31 is larger than the capacity of the coolant in second tank 21. The capacity of the coolant in first tank 31 may be less than or equal to the capacity of the coolant in second tank 21.

Coolant treatment device 10 further has a first flow path 51, a second pump 62, and a filter 41.

First flow path 51 is a path through which the coolant flows, and is constituted by a pipe member such as a steel pipe or a hose. First flow path 51 is connected to first tank 31. First flow path 51 extends between first tank 31 and a branch portion 56 described later. Second pump 62 and filter 41 are provided on a route of first flow path 51. Second pump 62 is provided more upstream of a coolant flow in first flow path 51, than filter 41.

First flow path 51 includes a first pipe 71. First pipe 71 is connected to first tank 31. First pipe 71 is connected to bottom portion 32. A connection portion 71p of first pipe 71 with respect to bottom portion 32 is opened in bottom portion 32 to storage space 30. Connection portion 71p of first pipe 71 forms a circular opening in bottom portion 32. First pipe 71 connects between first tank 31 and second pump 62. First pipe 71 discharges the coolant from inside first tank 31 (storage space 30).

First tank 31 is configured to form a space 37 below bottom portion 32. More specifically, first tank 31 further has an underlying plate 36 and a plurality of column portions 35. Underlying plate 36 is placed on a floor surface of a factory or the like in which coolant treatment device 10 is installed. Column portions 35 extend in the up-down direction. Upper end portions of column portions 35 are connected to bottom portion 32, and lower end portions of column portions 35 are connected to underlying plate 36. The plurality of column portions 35 are disposed to be spaced from one another. Space 37 is formed between bottom portion 32 and underlying plate 36.

Second pump 62 is disposed in space 37. Second pump 62 has a motor 72, a shaft 76, an impeller 73, a coolant inflow portion 74, and a coolant outflow portion 75.

Motor 72 is provided as a motive power source for second pump 62. Motor 72 is supplied with electric power and thereby outputs rotational movement about an imaginary central axis 102. Impeller 73 is provided to be spaced from motor 72 in an axial direction of central axis 102. Shaft 76 extends on an axis of central axis 102, and is connected to motor 72 and impeller 73 at both ends thereof. Shaft 76 transmits the rotational movement outputted from motor 72 to impeller 73. Upon receiving the rotational movement transmitted from shaft 76, impeller 73 rotates about central axis 102.

Coolant inflow portion 74 is opened at an end portion of second pump 62 in the axial direction of central axis 102. First pipe 71 is connected to coolant inflow portion 74. Coolant outflow portion 75 is opened at a position spaced radially outward from central axis 102. A pipe constituting first flow path 51 and extending toward filter 41 is connected to coolant outflow portion 75.

Second pump 62 is disposed in space 37 in an attitude in which shaft 76 (central axis 102) extends in the horizontal direction.

Filter 41 can remove foreign matter such as sludge or chips contained in the coolant flowing through first flow path 51. As an example, filter 41 is a cyclone-type filtering device that separates a coolant and foreign matter such as sludge or chips contained in the coolant using a centrifugal force. Filter 41 may be provided in a manner supported by first tank 31.

As second pump 62 is driven, a flow of the coolant is formed in first flow path 51. As the coolant flowing through first flow path 51 passes through filter 41, the foreign matter such as sludge or chips contained in the coolant is removed. Thereby, the cleaned coolant is supplied through first flow path 51.

Coolant treatment device 10 further has a second flow path 52, a coolant discharge device 46, and a first pump 61.

Second flow path 52 branches from first flow path 51. The coolant from first flow path 51 flows through second flow path 52. Second flow path 52 is a path through which the coolant flows, and is constituted by a pipe member such as a steel pipe or a hose. At branch portion 56, second flow path 52 is connected to first flow path 51 and a third flow path 53 described later, via various pipe joints. Second flow path 52 extends between branch portion 56 and coolant discharge device 46.

Coolant discharge device 46 discharges the coolant toward a machining point for a workpiece. Coolant discharge device 46 is a spindle-through type coolant discharge device that is provided in a tool spindle and discharges a coolant from a cutting edge of a tool T held by the tool spindle.

First pump 61 is provided on a route of second flow path 52. First pump 61 delivers the coolant toward coolant discharge device 46.

Coolant treatment device 10 further has third flow path 53, a nozzle portion 47, a fourth flow path 54, and a flow rate adjusting portion 66.

Third flow path 53 branches from first flow path 51. The coolant from first flow path 51 flows through third flow path 53. Third flow path 53 is a path through which the coolant flows, and is constituted by a pipe member such as a steel pipe or a hose. Third flow path 53 extends between branch portion 56 and nozzle portion 47.

Nozzle portion 47 is disposed inside drum filter 42 having a cylindrical shape. Nozzle portion 47 discharges the coolant supplied from third flow path 53. Nozzle portion 47 discharges the coolant toward drum filter 42 rotating about central axis 101, to remove foreign matter such as sludge or chips from drum filter 42.

Fourth flow path 54 branches from third flow path 53. Fourth flow path 54 leads the coolant from third flow path 53 to second tank 21. Fourth flow path 54 is a path through which the coolant flows, and is constituted by a pipe member such as a steel pipe or a hose. At a branch portion 57, fourth flow path 54 is connected to third flow path 53, via various pipe joints. Fourth flow path 54 extends between branch portion 57 and second tank 21.

Flow rate adjusting portion 66 is provided on a route of fourth flow path 54. Flow rate adjusting portion 66 provides resistance against a coolant flow in fourth flow path 54.

Flow rate adjusting portion 66 is constituted by a check valve that permits a coolant flow from branch portion 57 toward second tank 21 and restricts a coolant flow from second tank 21 toward branch portion 57, while providing resistance against the coolant flow in fourth flow path 54. Flow rate adjusting portion 66 is not limited to the check valve described above, and may be constituted for example by an orifice having a channel narrowed to have a relatively large flow path area on a branch portion 57 side and have a relatively small flow path area on a second tank 21 side.

Coolant treatment device 10 further has a fifth flow path 55 and a third pump 63. Fifth flow path 55 extends between second tank 21 and first tank 31. Fifth flow path 55 is a path through which the coolant flows, and is constituted by a pipe member such as a steel pipe or a hose.

Third pump 63 is provided on a route of fifth flow path 55. Third pump 63 delivers the coolant from second tank 21 toward first tank 31, through fifth flow path 55. Third pump 63 is installed on second tank 21. Third pump 63 is a pumping-up pump that pumps up the coolant stored in second tank 21 and delivers it toward first tank 31. Third pump 63 is provided at an end portion of fifth flow path 55 on the second tank 21 side.

In such a configuration, a circulation path of the coolant is constituted by annularly connecting second tank 21, fifth flow path 55, first tank 31, first flow path 51, third flow path 53, and fourth flow path 54 in this order. The coolant circulates through this circulation path by operating third pump 63 and second pump 62. As the coolant passes through filter 41 during this circulation, the coolant stored in second tank 21 and first tank 31 can be cleaned.

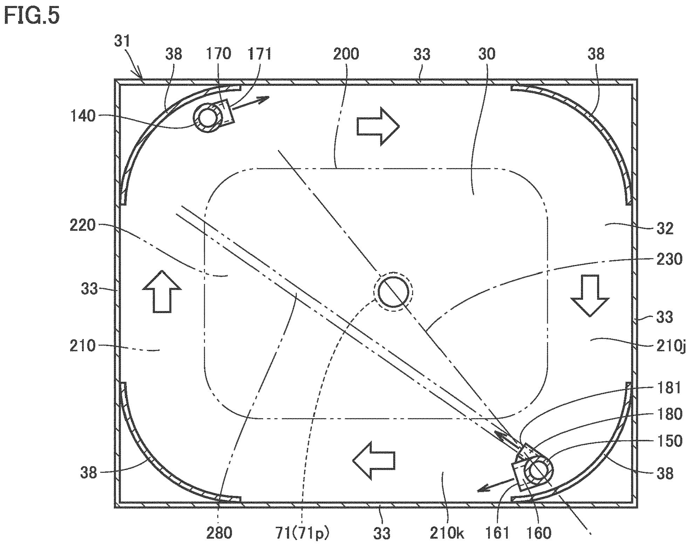

Next, a structure of first tank 31 in Fig. 1 will be described in detail. Fig. 5 is a cross sectional view showing the first tank viewed in a direction of arrows on a two-dot chain line V-V in Fig. 3.

Referring to Figs. 3 and 5, first tank 31 further has a guide portion 38. Guide portion 38 is disposed in storage space 30 within first tank 31. Guide portion 38 is provided on bottom portion 32. Guide portion 38 extends along the peripheral edge of bottom portion 32 when viewed in a top view. Guide portion 38 guides a swirling flow of the coolant described later, along the peripheral edge of bottom portion 32.

Guide portion 38 is made of plate materials provided upright on bottom portion 32. Guide portion 38 extends in a curved manner when viewed in a top view. Guide portion 38 forms a curved shape protruding from the center toward the peripheral edge of bottom portion 32 when viewed in a top view. Guide portion 38 is provided at four corners of bottom portion 32 having a rectangular shape when viewed in a top view. Guide portion 38 is divided at positions between mutually adjacent corner portions of bottom portion 32.

Bottom portion 32 includes a peripheral edge region 210 and a central region 220 defined therein. Peripheral edge region 210 extends circumferentially along the peripheral edge of bottom portion 32. Peripheral edge region 210 extends annularly in a circumferential direction of the peripheral edge of bottom portion 32. A circumferential direction of peripheral edge region 210 corresponds to the circumferential direction of the peripheral edge of bottom portion 32. Central region 220 is disposed inside peripheral edge region 210. Central region 220 has first pipe 71 (connection portion 71p) opened therein.

Fig. 5 shows a boundary line 200 serving as a boundary between peripheral edge region 210 and central region 220. Peripheral edge region 210 is defined between side portion 33/guide portion 38 and boundary line 200. Peripheral edge region 210 extends annularly, while maintaining a constant length (width) between side portion 33/guide portion 38 and boundary line 200. Central region 220 is defined in a range surrounded by boundary line 200. First pipe 71 (connection portion 71p) is opened at a center position of central region 220. First pipe 71 (connection portion 71p) may be opened at a position deviated from the center position of central region 220.

Coolant treatment device 10 further has a first coolant discharge portion 160 and a second coolant discharge portion 170.

First coolant discharge portion 160 and second coolant discharge portion 170 are disposed in storage space 30 within first tank 31. Each of first coolant discharge portion 160 and second coolant discharge portion 170 is made of a pipe member that can discharge the coolant.

First coolant discharge portion 160 is provided at a position spaced upward from bottom portion 32. First coolant discharge portion 160 is disposed above peripheral edge region 210. First coolant discharge portion 160 is provided at a position where it is projected on peripheral edge region 210 in the up-down direction. First coolant discharge portion 160 discharges the coolant such that a swirling flow of the coolant is produced on peripheral edge region 210.

Second coolant discharge portion 170 is provided at a position spaced upward from bottom portion 32. Second coolant discharge portion 170 is disposed above peripheral edge region 210. Second coolant discharge portion 170 is provided at a position where it is projected on peripheral edge region 210 in the up-down direction. Second coolant discharge portion 170 discharges the coolant such that a swirling flow of the coolant is produced on peripheral edge region 210.

First coolant discharge portion 160 and second coolant discharge portion 170 discharge the coolant toward the same direction (a clockwise direction in a top view shown in Fig. 5) along the circumferential direction of peripheral edge region 210.

As the coolant is discharged from first coolant discharge portion 160 and second coolant discharge portion 170, a swirling flow in which the coolant swirls in one direction (the clockwise direction in the top view shown in Fig. 5) along the circumferential direction of peripheral edge region 210 is formed on peripheral edge region 210.

Second coolant discharge portion 170 is provided at a position where it faces first coolant discharge portion 160 across central region 220 in a top view. Central region 220 is located between a first coolant discharge port 161 and a second coolant discharge port 171 in a top view. Second coolant discharge portion 170 is provided at a position spaced from first coolant discharge portion 160 in the circumferential direction of peripheral edge region 210.

Each of first coolant discharge portion 160 and second coolant discharge portion 170 is provided at a position where it faces guide portion 38 in the horizontal direction. Each of first coolant discharge portion 160 and second coolant discharge portion 170 may be provided at a position where it faces side portion 33 in the horizontal direction.

First coolant discharge portion 160 and second coolant discharge portion 170 have first coolant discharge port 161 and second coolant discharge port 171, respectively. Each of first coolant discharge port 161 and second coolant discharge port 171 is an opening that can discharge the coolant.

Each of first coolant discharge port 161 and second coolant discharge port 171 is opened toward the circumferential direction of peripheral edge region 210. First coolant discharge port 161 and second coolant discharge port 171 are opened toward the same direction (the clockwise direction in the top view shown in Fig. 5) along the circumferential direction of peripheral edge region 210.

First coolant discharge port 161 and second coolant discharge port 171 are opened at the same height. Each of first coolant discharge port 161 and second coolant discharge port 171 is opened at a position closer to a lower end portion 33t of side portion 33 than to an upper end portion 33s of side portion 33 in the up-down direction.

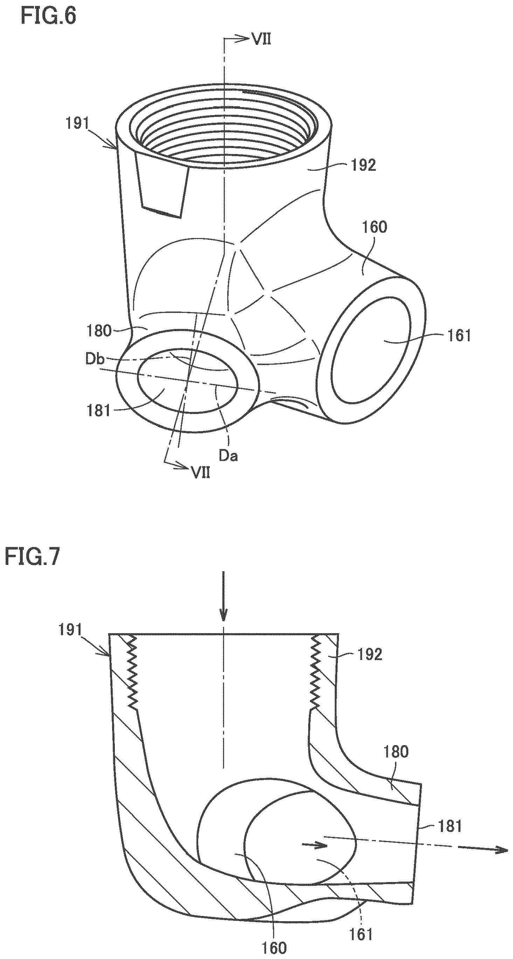

Fig. 6 is a perspective view showing the first coolant discharge portion and a third coolant discharge portion. Fig. 7 is a cross sectional view showing the first coolant discharge portion and the third coolant discharge portion viewed in a direction of arrows on a line VII-VII in Fig. 6.

Referring to Figs. 3, 5, 6, and 7, coolant treatment device 10 further has a third coolant discharge portion 180.

Third coolant discharge portion 180 is disposed in storage space 30 within first tank 31. Third coolant discharge portion 180 is made of a pipe member that can discharge the coolant.

Third coolant discharge portion 180 is provided at a position spaced upward from bottom portion 32. Third coolant discharge portion 180 is disposed above peripheral edge region 210. Third coolant discharge portion 180 is provided at a position where it is projected on peripheral edge region 210 in the up-down direction.

Third coolant discharge portion 180 discharges the coolant in a direction which is directed from peripheral edge region 210 toward central region 220 and which avoids an opening of first pipe 71 (connection portion 71p) in central region 220 in a top view.

Fig. 5 shows a projection region 280 where a third coolant discharge port 181 described later is projected in a direction in which the coolant is discharged from third coolant discharge portion 180. Projection region 280 first passes through a position where it is projected on peripheral edge region 210 in the up-down direction, and then passes through a position where it is projected on central region 220 in the up-down direction. Projection region 280 passes through a position where it is not projected on the opening of first pipe 71 (connection portion 71p) in the up-down direction.

As shown in Fig. 5, peripheral edge region 210 includes an upstream-side region 210j and a downstream-side region 210k defined therein, with third coolant discharge portion 180 serving as a boundary, upstream-side region 210j being a region where a swirling flow of the coolant flows in a direction toward third coolant discharge portion 180, downstream-side region 210k being a region where a swirling flow of the coolant flows in a direction away from third coolant discharge portion 180. In upstream-side region 210j, the coolant flows from second coolant discharge portion 170 toward first coolant discharge portion 160. In downstream-side region 210k, the coolant flows from first coolant discharge portion 160 toward second coolant discharge portion 170.

A straight line 230 connecting third coolant discharge portion 180 and the opening of first pipe 71 (connection portion 71p) in central region 220 is assumed in a top view. In this case, third coolant discharge portion 180 discharges the coolant in a direction directed toward central region 220 in a range sandwiched between straight line 230 and downstream-side region 210k. Projection region 280 passes through a position where it is projected on central region 220 in the range sandwiched between straight line 230 and downstream-side region 210k, in the up-down direction.

Third coolant discharge portion 180 has third coolant discharge port 181. Third coolant discharge port 181 is an opening that can discharge the coolant. Third coolant discharge port 181 is opened toward central region 220. Third coolant discharge port 181 is opened toward central region 220 in the range sandwiched between straight line 230 and downstream-side region 210k.

According to such a configuration, by discharging the coolant from first coolant discharge portion 160 and second coolant discharge portion 170 to produce a swirling flow of the coolant on peripheral edge region 210 of bottom portion 32, foreign matter such as sludge or chips can be moved from peripheral edge region 210 to central region 220 on the inside thereof.

On this occasion, when discharging of the coolant for producing a swirling flow of the coolant is performed by a single coolant discharge portion, it is necessary to set a coolant discharge amount from the coolant discharge portion to be large. This raises a concern that a swirling flow in the up-down direction may be added to the coolant flow in storage space 30, and foreign matter such as sludge or chips deposited on bottom portion 32 may be scattered in storage space 30. Such a concern can be eliminated in the present embodiment, because discharging of the coolant for producing a swirling flow of the coolant is performed by first coolant discharge portion 160 and second coolant discharge portion 170.

Since the momentum of the swirling flow of the coolant weakens in central region 220, there may occur a phenomenon in which foreign matter such as sludge or chips remains in central region 220 around the opening of first pipe 71. In response thereto, by discharging the coolant from third coolant discharge portion 180 in the direction directed from peripheral edge region 210 toward central region 220 in a top view, turbulence is produced in the foreign matter such as sludge or chips in central region 220, and the foreign matter can be collected into the opening of first pipe 71. Further, since the coolant is discharged from third coolant discharge portion 180 in the direction which avoids the opening of first pipe 71 in central region 220, the foreign matter collected into the opening of first pipe 71 can be prevented from being scattered again.

Therefore, by discharging the coolant from first coolant discharge portion 160, second coolant discharge portion 170, and third coolant discharge portion 180, the foreign matter such as sludge or chips can be efficiently discharged from first tank 31 through first pipe 71.

Further, filter 41 is provided on first flow path 51 through which the coolant discharged from first tank 31 flows. Thereby, the foreign matter such as sludge or chips discharged from first tank 31 through first pipe 71 can be collected by filter 41. Further, third coolant discharge portion 180 is provided at a position spaced upward from bottom portion 32. Thereby, the swirling flow of the coolant formed on peripheral edge region 210 of bottom portion 32 can be suppressed from being interrupted by third coolant discharge portion 180.

As shown in Figs. 6 and 7, third coolant discharge portion 180 discharges the coolant toward a diagonally downward direction. Third coolant discharge port 181 is opened toward the diagonally downward direction. According to such a configuration, since the coolant is discharged from third coolant discharge portion 180 toward bottom portion 32, a greater turbulence can be produced in the foreign matter such as sludge or chips deposited on central region 220 of bottom portion 32.

As shown in Fig. 3, third coolant discharge port 181 is opened at a position closer to lower end portion 33t of side portion 33 than to upper end portion 33s of side portion 33 in the up-down direction. A length Hb1 between third coolant discharge port 181 and lower end portion 33t of side portion 33 in the up-down direction is smaller than a length Hb2 between upper end portion 33s of side portion 33 and third coolant discharge port 181 in the up-down direction (Hb1 < Hb2).

According to such a configuration, since third coolant discharge port 181 is opened at the position closer to bottom portion 32, discharging of the coolant from third coolant discharge port 181 can produce a greater turbulence in the foreign matter such as sludge or chips deposited on central region 220 of bottom portion 32.

As shown in Figs. 6 and 7, third coolant discharge port 181 is opened in a flattened shape to have an opening length Da in the horizontal direction larger than an opening length Db in the up-down direction (Da > Db). Third coolant discharge port 181 is an opening in the shape of a horizontally long ellipse.

According to such a configuration, since the coolant discharged from third coolant discharge portion 180 can flow more flatly along the surface of bottom portion 32, a greater turbulence can be produced in the foreign matter such as sludge or chips deposited on central region 220 of bottom portion 32.

Coolant treatment device 10 has a pipe member 191. In pipe member 191, third coolant discharge portion 180 is provided integrally with first coolant discharge portion 160.

Pipe member 191 has first coolant discharge portion 160, third coolant discharge portion 180, and a connection portion 192. Connection portion 192 is a bottomed cylindrical body opened upward. An inner circumferential surface of connection portion 192 is provided with a threaded portion for connecting a second pipe 150 described later. First coolant discharge portion 160 is a cylindrical body that is in communication with connection portion 192 and protrudes radially outward from an outer circumferential surface of connection portion 192. First coolant discharge port 161 is opened at a tip of first coolant discharge portion 160 protruding from the outer circumferential surface of connection portion 192.

Third coolant discharge portion 180 is a cylindrical body that is in communication with connection portion 192 and protrudes radially outward from the outer circumferential surface of connection portion 192. Third coolant discharge portion 180 is provided at a position spaced from first coolant discharge portion 160 in a circumferential direction of the outer circumferential surface of connection portion 192. Third coolant discharge port 181 is opened at a tip of third coolant discharge portion 180 protruding from the outer circumferential surface of connection portion 192. The opening area of third coolant discharge port 181 is smaller than the opening area of first coolant discharge port 161. The opening area of third coolant discharge port 181 may be more than or equal to the opening area of first coolant discharge port 161.

As shown in Figs. 3 and 5, coolant treatment device 10 further has second pipe 150 and a third pipe 140. The coolant is supplied to second pipe 150 and third pipe 140. First coolant discharge portion 160 and third coolant discharge portion 180 are connected to second pipe 150. Second coolant discharge portion 170 is connected to third pipe 140.

The coolant from second tank 21 is supplied to each of second pipe 150 and third pipe 140 through fifth flow path 55. Each of second pipe 150 and third pipe 140 extends in the up-down direction, and enters storage space 30 within first tank 31. First coolant discharge portion 160 and third coolant discharge portion 180 are (i.e., connection portion 192 of pipe member 191 is) connected to a lower end portion of second pipe 150. Second coolant discharge portion 170 is connected to a lower end portion of third pipe 140.

According to such a configuration, since the coolant is supplied collectively to the first coolant discharge portion and the third coolant discharge portion through second pipe 150, coolant treatment device 10 can have a simple configuration.

It should be noted that third coolant discharge portion 180 may be provided separately from first coolant discharge portion 160.

Third pump 63 in Fig. 1 pumps the coolant stored in second tank 21 toward first coolant discharge portion 160 and third coolant discharge portion 180 through fifth flow path 55 and second pipe 150, and pumps the coolant toward second coolant discharge portion 170 through fifth flow path 55 and third pipe 140.

According to such a configuration, since third pump 63 for returning the coolant to first tank 31 from second tank 21 that stores the coolant discharged from machine tool main body 110 is utilized to supply the coolant to first coolant discharge portion 160, second coolant discharge portion 170, and third coolant discharge portion 180, the foreign matter such as sludge or chips can be efficiently discharged.

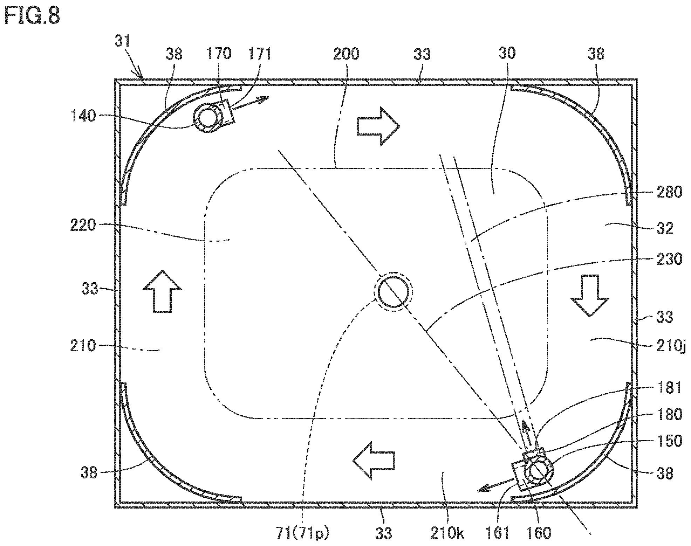

Fig. 8 is a cross sectional view showing a variation of the coolant treatment device in Fig. 5. Referring to Fig. 8, in the present variation, third coolant discharge portion 180 discharges the coolant in a direction directed toward central region 220 in a range sandwiched between straight line 230 and upstream-side region 210j. Projection region 280 passes through a position where it is projected on central region 220 in the range sandwiched between straight line 230 and upstream-side region 210j, in the up-down direction. As shown in the present variation, the direction in which the coolant is discharged from third coolant discharge portion 180 may be a direction opposite to the direction of the swirling flow of the coolant formed on central region 220 of bottom portion 32.

The structure of coolant treatment device 10 in the embodiment of the present invention described above will be summarized below. Coolant treatment device 10 in the present embodiment includes: first tank 31 that has bottom portion 32 and side portion 33 rising from a peripheral edge of bottom portion 32, and can store a coolant at a position which is above bottom portion 32 and is surrounded by side portion 33; and first pipe 71 that is connected to bottom portion 32 and discharges the coolant from inside first tank 31. Bottom portion 32 includes peripheral edge region 210 and central region 220 defined therein, peripheral edge region 210 extending circumferentially along the peripheral edge of bottom portion 32, central region 220 being disposed inside peripheral edge region 210 and having first pipe 71 opened therein. Coolant treatment device 10 further includes: first coolant discharge portion 160 that is disposed above peripheral edge region 210 and discharges the coolant such that a swirling flow of the coolant is produced on peripheral edge region 210; second coolant discharge portion 170 that is disposed above peripheral edge region 210, is provided at a position where second coolant discharge portion 170 faces first coolant discharge portion 160 across central region 220 in a top view, and discharges the coolant such that a swirling flow of the coolant is produced on peripheral edge region 210; and third coolant discharge portion 180 that is disposed above peripheral edge region 210 and discharges the coolant in a direction which is directed from peripheral edge region 210 toward central region 220 and which avoids an opening of first pipe 71 in central region 220 in a top view.

According to coolant treatment device 10 in the embodiment of the present invention configured as described above, foreign matter such as sludge or chips contained in the coolant can be efficiently discharged from inside first tank 31.

It should be understood that the embodiment disclosed herein is illustrative and non-restrictive in every respect. The scope of the present invention is defined by the scope of the claims, rather than the description above, and is intended to include any modifications within the scope and meaning equivalent to the scope of the claims.

### INDUSTRIAL APPLICABILITY

The present invention is applicable to a coolant treatment device used for a machine tool, for example.

### REFERENCE SIGNS LIST

10: coolant treatment device; 11: chip conveyor; 13: chip reception port; 16: chip discharge port; 19: cover body; 20, 30: storage space; 21: second tank; 22, 32: bottom portion; 23, 33: side portion; 31: first tank; 33s: upper end portion; 33t: lower end portion; 34: top portion; 35: column portion; 36: underlying plate; 37: space; 38: guide portion; 41: filter; 42: drum filter; 46: coolant discharge device; 47: nozzle portion; 51: first flow path; 52: second flow path; 53: third flow path; 54: fourth flow path; 55: fifth flow path; 56, 57: branch portion; 61: first pump; 62: second pump; 63: third pump; 66: flow rate adjusting portion; 71: first pipe; 71p, 192: connection portion; 72: motor; 73: impeller; 74: coolant inflow portion; 75: coolant outflow portion; 76: shaft; 100: machine tool; 101, 102: central axis; 110: machine tool main body; 120: machining area; 140: third pipe; 150: second pipe; 160: first coolant discharge portion; 161: first coolant discharge port; 170: second coolant discharge portion; 171: second coolant discharge port; 180: third coolant discharge portion; 181: third coolant discharge port; 191: pipe member; 200: boundary line; 210: peripheral edge region; 210j: upstream-side region; 210k: downstream-side region; 220: central region; 230: straight line; 280: projection region.

## Claims

1. A coolant treatment device comprising:
a first tank that has a bottom portion and a side portion rising from a peripheral edge of the bottom portion, and can store a coolant at a position which is above the bottom portion and is surrounded by the side portion;
a first pipe that is connected to the bottom portion and discharges the coolant from inside the first tank, the bottom portion including a peripheral edge region and a central region defined therein, the peripheral edge region extending circumferentially along the peripheral edge of the bottom portion, the central region being disposed inside the peripheral edge region and having the first pipe opened therein;
a first coolant discharge portion that is disposed above the peripheral edge region and discharges the coolant such that a swirling flow of the coolant is produced on the peripheral edge region;
a second coolant discharge portion that is disposed above the peripheral edge region, is provided at a position where the second coolant discharge portion faces the first coolant discharge portion across the central region in a top view, and discharges the coolant such that a swirling flow of the coolant is produced on the peripheral edge region; and
a third coolant discharge portion that is disposed above the peripheral edge region and discharges the coolant in a direction which is directed from the peripheral edge region toward the central region and which avoids an opening of the first pipe in the central region in a top view.

2. The coolant treatment device according to claim 1, wherein
the third coolant discharge portion has a coolant discharge port that discharges the coolant, and
the coolant discharge port is opened at a position closer to a lower end portion of the side portion than to an upper end portion of the side portion in an up-down direction.

3. The coolant treatment device according to claim 1 or 2, wherein the third coolant discharge portion is provided at a position spaced upward from the bottom portion.

4. The coolant treatment device according to any one of claims 1 to 3, wherein the third coolant discharge portion discharges the coolant toward a diagonally downward direction.

5. The coolant treatment device according to any one of claims 1 to 4, wherein the third coolant discharge portion has a coolant discharge port that is opened in a flattened shape to have an opening length in a horizontal direction larger than an opening length in an up-down direction, and that discharges the coolant.

6. The coolant treatment device according to any one of claims 1 to 5, wherein
the peripheral edge region includes an upstream-side region and a downstream-side region defined therein, with the third coolant discharge portion serving as a boundary, the upstream-side region being a region where a swirling flow of the coolant flows in a direction toward the third coolant discharge portion, the downstream-side region being a region where a swirling flow of the coolant flows in a direction away from the third coolant discharge portion, and
when a straight line connecting the third coolant discharge portion and the opening of the first pipe in the central region is assumed in a top view, the third coolant discharge portion discharges the coolant in a direction directed toward the central region in a range sandwiched between the straight line and the downstream-side region.

7. The coolant treatment device according to any one of claims 1 to 5, wherein
the peripheral edge region includes an upstream-side region and a downstream-side region defined therein, with the third coolant discharge portion serving as a boundary, the upstream-side region being a region where a swirling flow of the coolant flows in a direction toward the third coolant discharge portion, the downstream-side region being a region where a swirling flow of the coolant flows in a direction away from the third coolant discharge portion, and
when a straight line connecting the third coolant discharge portion and the opening of the first pipe in the central region is assumed in a top view, the third coolant discharge portion discharges the coolant in a direction directed toward the central region in a range sandwiched between the straight line and the upstream-side region.

8. The coolant treatment device according to any one of claims 1 to 7, further comprising a second pipe and a third pipe to which the coolant is supplied, wherein
the first coolant discharge portion and the third coolant discharge portion are connected to the second pipe, and
the second coolant discharge portion is connected to the third pipe.

9. The coolant treatment device according to any one of claims 1 to 8, further comprising a filter provided on a flow path of the coolant discharged from the first tank through the first pipe.

10. The coolant treatment device according to any one of claims 1 to 9, further comprising:
a second tank that stores the coolant discharged from a machine tool main body; and
a pump that pumps the coolant stored in the second tank toward the first coolant discharge portion, the second coolant discharge portion, and the third coolant discharge portion.
